**Europäisches Patentamt**

**European Patent Office**

**Office européen des brevets**

(11) Veröffentlichungsnummer: **0 245 899**
**A1**

## (12) EUROPÄISCHE PATENTANMELDUNG

(21) Anmeldenummer: **87200779.4**

(22) Anmeldetag: **24.04.87**

(51) Int. Cl.³: **H 04 M 3/26**
**H 04 L 11/12**

(30) Priorität: **12.05.86 CH 1921/86**

(43) Veröffentlichungstag der Anmeldung:
**19.11.87 Patentblatt 87/47**

(84) Benannte Vertragsstaaten:
**CH DE FR GB LI NL SE**

(71) Anmelder: Hasler AG
Belpstrasse 23
CH-3000 Bern 14(CH)

(72) Erfinder: Wolf, Georges
Route de Schiffenen 6
CH-1700 Fribourg(CH)

(74) Vertreter: Schwerdtel, Eberhard, Dr.
c/o Hasler AG Belpstrasse 23
CH-3000 Bern 14(CH)

(54) Einrichtung zum Testen der Leitungsausrüstung einer Vermittlungszentrale.

(57) Die Einrichtung umfasst eine zentrale Teststation (32) mit einem Mithörempfänger (50), einem Testgenerator (51) und einem Adressengenerator (52) sowie eine Vielzahl von ersten (16) und zweiten Leitkreisen (26).

Der Adressengenerator (52) ermöglicht über die Steuerleitungen (27, 28) das Anwählen jeweils eines der Leitkreise (16,26), wodurch dieser signalmässig von seinem Eingang (14, 29) über eine erste Sammelleitung (17) mit dem Mithörempfänger (50) verbunden wird. Weiter wird jeweils sein Ausgang (19,24) über eine zweite Sammelleitung (18) mit dem Textgenerator (51) verbunden.

Im angewählten Zustand lassen sich hierdurch die beim jeweiligen Leitkreis (16, 26) ankommenden Signale auf Fehler überprüfen bzw. für Testzwecke vom Textgenerator (52) Testsignale auf die jeweilige abgehende Verbindung (29, 24) aussenden.

Die Einrichtung erlaubt damit die Überprüfung der Funktionsfähigkeit jedes einzelnen Kanals der umfangreichen Leitungsausrüstung einer digital arbeitenden Vermittlungszentrale.

Fig. 2

**0245899**

## Einrichtung zum Testen der Leitungsausrüstung einer Vermittlungszentrale

Die Erfindung betrifft eine Einrichtung zum Testen der Leitungsausrüstung einer Vermittlungszentrale entsprechend dem Oberbegriff von Anspruch 1.

Vermittlungszentralen der Telekommunikationstechnik stehen weltweit im Einsatz. Sie sind als Telefon-, Daten- oder Telexzentralen im allgemeinen speziell an ihre Verwendung angepasst. In den letzten Jahren haben sich insbesondere rein elektronisch aufgebaute Zentralen durchgesetzt.

Aus Hasler-Mitteilungen 33 (Dez. 1974) 3, 81-115 ist eine vollelektronische und speicherprogrammierte Telexzentrale bekannt. Diese umfasst eine zentrale Rechenanlage mit zugehörigem Speicher sowie eine sogenannte Leitungsausrüstung, an die eine Vielzahl von Leitungen anschliessbar ist. Die Zentrale verbindet jederzeit eine beliebige Anzahl ankommender Leitungen mit einer nicht unbedingt gleichen Anzahl abgehender Leitungen zum Zwecke des Nachrichtenaustausches.

Aus der Patentschrift CH 616 792 ist ein Verfahren zum Multiplizieren und zum Demultiplizieren von Binärzeichen und eine Vorrichtung zur Ausübung des Verfahrens bekannt. Hierbei handelt es sich um eine besonders günstige Methode zum Betreiben der oben genannten Leitungsausrüstung.

Eine Telekommunikationszentrale ist im allgemeinen eine sehr umfangreiche und komplexe Einrichtung, die erhebliche Prüf- und Testvorrichtungen benötigt. Die vorliegende Erfindung hat sich die Aufgabe gestellt, eine die bekannten Testvorrichtungen ergänzende weitere Testeinrichtung anzugeben, die es erlaubt, insbesondere in der Leitungsausrüstung wesentliche Verbesserungen für die Diagnose, die Fehlersuche und/oder die vorsorgliche Wartung zu erreichen. Die Lösung dieser Aufgabe wird durch den kennzeichnenden Teil der unabhängigen Patentansprüche gegeben. Die abhängigen Ansprüche geben Ausgestaltungen der Erfindung an.

Im folgenden wird die Erfindung anhand von 5 Figuren beispielsweise näher beschrieben. Es zeigen:

Fig. 1 - Blockschaltbild einer Telexzentrale

Fig. 2 - Blockschaltbild einer Vielzahl von Leitkreisen und einer zentralen Teststation

Fig. 3 - Ausführungsbeispiel eines ersten Leitkreises

Fig. 4 - Ausführungsbeispiel eines zweiten Leitkreises

Fig. 5 - Schematischer Überblick über die Adressen bzw. Steuerleitungen zum Ansteuern der Leitkreise.

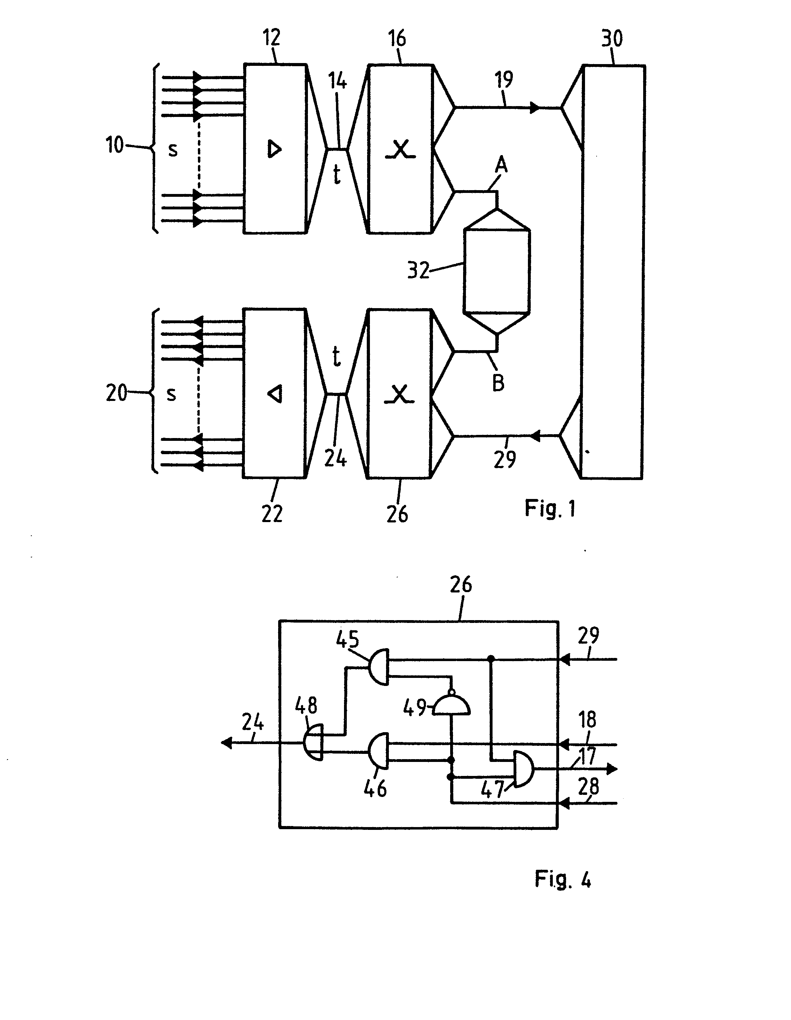

Fig. 1 zeigt ein Blockschaltbild einer vollständigen Telexzentrale. Über eine Vielzahl von ankommenden Übertragunsleitungen 10, z.B. bis zu 32 000 Leitungen, erreichen binärkodierte Leitungssignale s je eine Eingangsanschlusseinheit 12. Diese Einheiten 12 sind an die jeweilige Art von ankommender Übertragungsleitung 10 angepasst und geben an ihren Ausgängen 14 in ihren Pegeln normierte, digitale Signale t ab.

- 3 -  Fall 661

**0245899**

Die Leitungssignale s können beispielsweise 5-Schritt-Telexsignale mit Start- und Stoppschritt sein, die als FSK-Signale (frequency shift keying) über eine der Leitungen 10 ankommen. Über die diversen Möglichkeiten, in der die Leitungssignale s sonst noch vorliegen können, gibt beispielsweise die Schrift "Leitungsanschlusstechnik im internationalen Telexnetz", H. Marbet, Hasler Mitteilungen 37 (Dez. 1978) 4, 67-73 Auskunft. Die Signale t sind im Pegel normiert, beispielsweise auf den Pegel der TTL-Halbleiterelektronik (Transistor/Transistor-Logik), entsprechen jedoch in ihrem binärem Aufbau, d.h. der zeitlichen Folge von 0 und 1, vollkommen den Signalen s.

Den abgehenden Übertragungsleitungen 20 sind entsprechend Ausgangsanschlusseinheiten 22 vorgeschaltet, die aus digitalen Signalen t mit normiertem Pegel an ihren Eingängen 24 binärkodierte Leitungssignale s erzeugen, die über die Leitungen 20 ausgesandt werden.

Die ankommenden 10 und die abgehenden Übertragungsleitungen 20 sind in Fig. 1 als getrennte Leitungen dargestellt, die jedoch bevorzugt gepaart zu den diversen Teilnehmerstellen, insbesondere Fernschreibapparaten, führen bzw. von diesen kommen. In diesem Fall spricht man von 4-Drahtleitungen. Bei 2-Drahtleitungen werden die ankommenden 10 und die abgehenden Leitungen 20 für den Nachrichtenverkehr in beiden Richtungen zusammengefasst, was dann jedoch nicht gezeigte Duplexsperren erfordert.

Den Eingangsanschlusseinheiten 12 sind erste Leitkreise 16 nachgeschaltet, den Ausgangsanschlusseinheiten 22 zweite Leitkreise 26 vorgeschaltet. Diese Leitkreise 16 und 26 sind über Verbindungen 19 bzw. 29 mit der eigentlichen Telexzentrale 30 verbunden, insbesondere mit den nicht gezeigten Multiplexern und Demultiplexern der Leitungsausrüstung entsprechend der genannten Schrift CH 616 792. Über Leitungen A und B sind sie (16, 26) mit einer zentralen Teststation 32 verbunden.

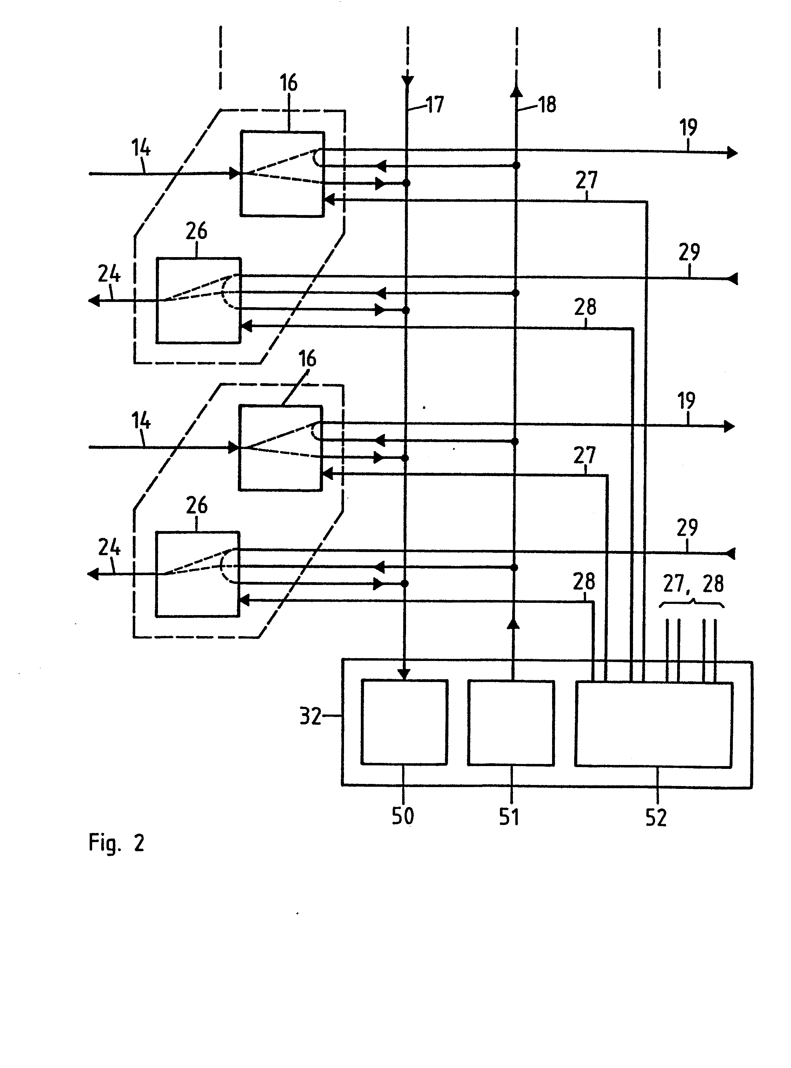

Fig. 2 zeigt ein verfeinertes Blockschaltbild der Leitkreise 16 und 26 sowie der zentralen Teststation 32. Die Teststation 32 umfasst einen Mithörempfänger 50, einen Textgenerator 51 und einen Adressengenerator bzw. Kanalwähler 52. Der Mithörempfänger 50 und der Textgenerator 51 können im einfachsten Fall als handelsüblicher Fernschreiber ausgebildet sein. Der Adressengenerator bzw. Kanalwähler 52 ist ausgebildet zum generieren von jeweils einer von bis zu 32'000 Adressen. Er gibt die jeweils angewählte Adresse jeweils für die beliebige Dauer einer Testperiode ab, wählt also den "Kanal" so lange an, wie es die Testperiode erfordert.

Jedem Ausgang 14 einer (in Fig. 2 nicht gezeigten) Eingangsanschlusseinheit 12 ist (wie bereits beschrieben) ein erster Leitkreis 16 nachgeschaltet. Jeder dieser ersten Leitkreise 16 ist über eine erste Sammelleitung 17 mit dem Mithörempfänger 50 verbunden und über eine zweite Sammelleitung 18 mit dem Textgenerator 51. Weiter ist jeder erste Leitkreis 16 über eine individuell zugeordnete Verbindung 19 mit der (in Fig. 2 nicht gezeigten) Telexzentrale 30 verbunden.

Die zweiten Leitkreise 26 sind entsprechend ebenfalls mit der ersten 17 und zweiten Sammelleitung 18 sowie über je eine separate Verbindung 24

0245899

und 29 mit den (in Fig. 2 nicht gezeigten) Ausgangsanschlusseinheiten 22 bzw. der Telexzentrale 30 verbunden. Die Sammelleitungen 17 und 18 sind somit allen ersten 16 und zweiten Leitkreisen 26 gemeinsam zugeordnet, und zwar in Art einer Bus-Leitung so, dass jeweils nur einer der Leitkreise 16, 26 signalmässig mit dem Mithörempfänger 50 bzw. dem Textgenerator 51 verbunden ist.

Jeder Leitkreis 16 erlaubt es, die im Pegel normierten Signale t von der jeweiligen Eingangverbindung 14 zur zugeordneten Ausgangverbindung 19 und/oder zur Sammelleitung 17 zu leiten. Weiter erlaubt er es, vom Textgenerator 51 über die Sammelleitung 18 eingegebene Signale auf die Ausgangsverbindung 19 zu leiten. Die zugeordneten Signalpfade sind gestrichelt gezeichnet. Die jeweilige Durchschaltung erfolgt aufgrund eines Adresssignals auf einer jeweiligen Steuerleitung 27, die den Adressengenerator bzw. Kanalwähler 52 mit dem jeweiligen ersten Leitkreis 16 verbindet.

In der abgehenden Richtung ermöglichen die zweiten Leitkreise 26 in analoger Weise das signalmässige Verbinden der Eingangsverbindungen 29 mit den Ausgangsverbindungen 24 und/oder mit der Sammelleitung 17 sowie das Verbinden der Sammelleitung 18 mit der Ausgangsverbindung 24. Auch diese Signalpfade sind gestrichelt dargestellt. Die Durchschaltung des jeweils gewünschten Pfades erfolgt aufgrund eines Adressensignales auf einer jeweiligen zweiten Steuerleitung 28, die den Adressengenerator 52 mit dem jeweiligen zweiten Leitkreis 26 verbindet.

Die ersten 16 und zweiten Leitkreise 26 ermöglichen mit ihren gesteuerten Signalpfaden das signalmässige Durchschalten der ankommenden Normsignale t von und zur Telexzentrale 30 sowie das Mithören ankommender Signale und die Eingabe von Texten. Die Leitkreise 16, 26 ermöglichen damit das

Testen der genannten Leitungsausrüstung der Telexzentrale 30, d.h. das Testen der Eingangs- (12) und Ausgangsanschlusseinheiten (22), der ankommenden (10) und der abgehenden Übertragungsleitungen (20) und ihres Zusammenspiels mit der eigentlichen Telexzentrale 30.


Aus praktischen Gründen ist die räumliche und paarweise Zusammenfassung je eines ersten 16 und eines zweiten Leitkreises 26 sinnvoll. Dies ist in Fig. 2 gestrichelt dargestellt. Bei geeigneter Ausbildung der Leitkreise 16 und 26 können dann auch die Steuerleitungen 27 und 28 paarweise zusammengefasst werden.


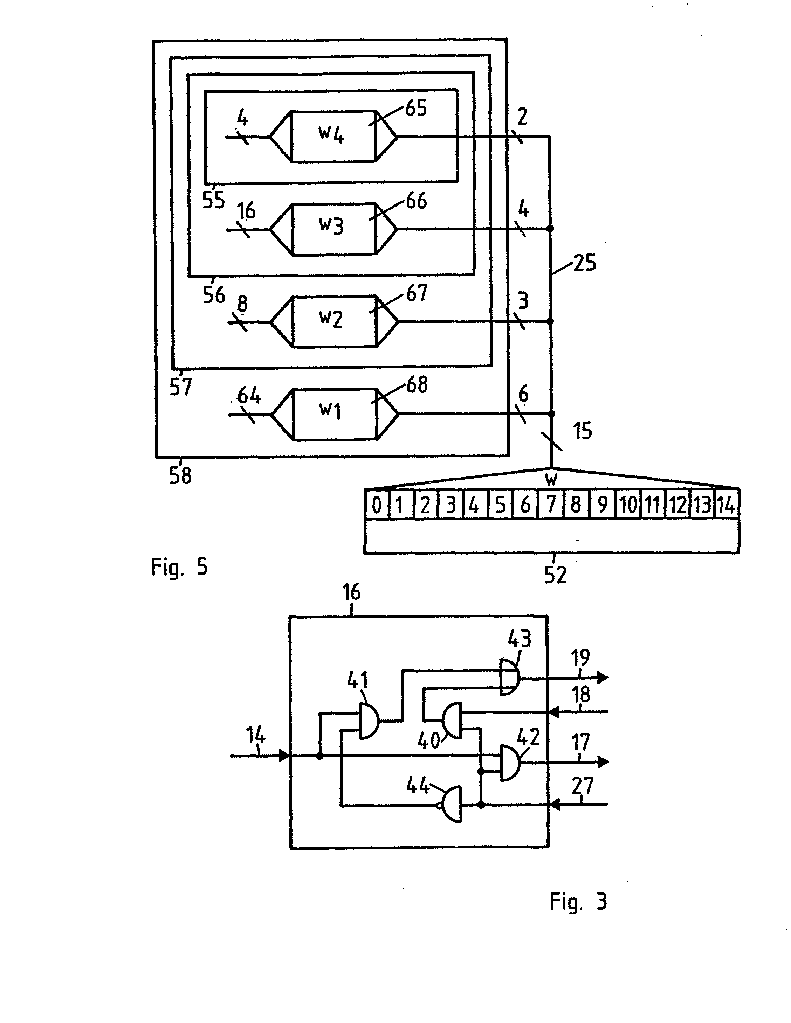

Fig. 3 zeigt ein Ausführungsbeispiel für einen ersten Leitkreis 16.

Dieser umfasst drei UND-Tore 40, 41, 42, ein ODER-Tor 43 und einen Inverter 44. Die UND-Tore 41, 42 sind mit ihren Eingängen zum einen an die Eingangsverbindung 14 und zum anderen an die Steuerleitung 27 angeschlossen, wobei das Signal auf dieser Leitung durch den Inverter 44 für das UND-Tor 41 invertiert wird. An die Steuerleitung 27 ist weiter der eine Eingang des UND-Tores 40 angeschlossen. Der zweite Eingang dieses Tores 40  ist an die zweite Sammelleitung 18 angeschlossen. Die Ausgänge der Tore 41 und 40 führen schliesslich über das ODER-Tor 43 über die Verbindung 19 zur Telexzentrale 30. Der gezeigte erste Leitkreis 16 erfüllt für digitale Signale und ein statisches Steuersignal die geforderte Funktion, wie sie anhand von Fig. 2

erläutert worden ist.

**0245899**

Fig. 4 zeigt ein Ausführungsbeispiel für einen zweiten Leitkreis 26. Auch dieser weist drei UND-Tore 45, 46, 47, ein ODER-Tor 48 und einen Inverter 49 auf. Die Zusammenschaltung dieser Tore und des Inverters ist identisch mit derjenigen des ersten Leitkreises 16. Dies bedeutet, dass die Schaltungen der Fig. 3 und 4 identisch sind. Die Unterschiede bestehen nur in den äusseren Anschlüssen dieser Schaltungen. Die Schaltung entsprechend Fig. 4 erfüllt die Funktion eines zweiten Leitkreises 26, wie sie anhand von Fig. 2 erläutert worden ist.

Es ist klar, dass die ersten 16 und zweiten Leitkreise 26 ohne weiteres auch anders aufgebaut sein können, beispielsweise mit invertierenden Toren (UND-NICHT-Toren). Für die jeweilige Ausführungsform sind vor allem praktische Gesichtspunkte massgebend, z.B. die Ausführbarkeit als integrierte, mikroelektronische Schaltung.

Als Steuer- bzw. Adresssignale für die gezeigten Leitkreise 16,26 werden statische Pegelsignale 0, 1 nötig, wobei die logische 0 dem normalen Arbeitszustand und die logische 1 dem Testzustand zugeordnet ist.

Nach Fig. 2 ist der Adressengenerator 52 über je eine Steuerleitung 27 und 28 mit jedem Leitkreis 16 bzw. 26 verbunden, die allerdings wie beschrieben paarweise zusammengefasst sein können. Bei der genannten Zahl von bis zu 32'000 ankommenden 10 und abgehenden Übertragungsleitungen 20, was dem Vollausbau einer bekannten Telexzentrale entspricht, ist eine entsprechend grosse Zahl von Steuerleitungen erforderlich. Dies bedeutet einen enormen Aufwand. Fig. 5 zeigt daher eine wesentlich günstigere Alternative.

0245899

Die ersten 15 und zweiten Leitkreise 26 sind bevorzugt als integrierte Schaltkreise 55 auf Baugruppen 56 (bzw. gedruckten Leiterplatten) montiert. Die Baugruppen 56 sind in Baugruppenträgern 57 (bzw. Einschüben) zusammengefasst, welche schliesslich in Gestellen 58 angeordnet sind. Ein solcher Aufbau ist allgemein üblich und beispielsweise in Hasler-Mitteilungen 38 (April 1979) 1, 1-8 beschrieben (W. Guggisberg, Die Bauweise IFS). Der Adressengenerator 52 gibt nun auf fünfzehn Adressleitungen 25 statisch und parallel jeweils ein Adresswort w ab, d.h. fünfzehn Bit entsprechend einer von $2^{15}$ möglichen Adressen. Dieses Adresswort w liegt parallel an allen, z.B. bis zu vierundsechzig Gestellen 58 an. In jedem Gestell 58 werden sechs der Adressleitungen 25, und zwar jeweils die gleichen, einem ersten Decoder 68 zugeführt, der die jeweilige Gestelladresse $w_1$ decodiert.

Die verbleibenden neun Adressleitungen 25 werden parallel in allen Gestellen 58 allen Baugruppenträgern 57 des jeweiligen Gestells zugeführt, in denen ein jeweiliger zweiter Decoder 67 aus drei der Adressleitungen 25 die jeweilige Baugruppenträgeradresse $w_2$ decodiert.

Die hierauf verbleibenden sechs Addressleitungen 25 werden analog zum Beschriebenen in allen Baugruppenträgern 56 durch jeweilige dritte Decoder 66 und in den Schalkreisen 55 durch jeweilige vierte Decoder 65 decodiert. Hierdurch ergibt sich insgesamt ein Minimum von Steuer- bzw. Adressleitungen 25, dem jedoch der Aufwand für die Vielzahl der Decoder 65 bis 68 gegenüber steht. Dieser Aufwand ist jedoch wegen der heutigen technologischen Möglichkeiten insgesamt eher gering.

Die beschriebene Alternative bietet neben der enormen Einsparung an Steuerleitungen 27, 28 den Vorteil, dass der Adressgenerator bzw. der Kanalwähler 52 im Aufbau einfach sein kann. Es genügt z.B. ein Schieberegister oder eine Schalterreihe, um jeweils genau eine Adresse w abzugeben.

Nach dem oben Beschriebenen besitzt jedes Gestell 58, jeder Baugruppenträger 57, jede Baugruppe 56 und jeder Chip 55 jeweils einen Decoder 68, 67, 66 bzw. 65, der jeweils nur auf eine einzige, ihm bzw. seiner Einheit zugeordnete Adresse anspricht.

Alternativ hierzu können räumlich zusammengefasste Einheiten, z.B. die Baugruppenträger 57 eines Gestells 58 oder die Baugruppen 56 eines Baugruppenträgers 57, jeweils gemeinsam einen Decoder (65 bis 68) aufweisen, der mehrere Adressen decodiert und beim Ansprechen ein Signal auf die der jeweiligen Adresse zugeordnete Leitung zur jeweils angewählten Einheit abgibt. Dies ist in Fig. 5 angedeutet durch die von den Decodern 65 bis 68 abgehenden Leitungen, wobei die an diesen Leitungen sowie an den Adressleitungen 25 angegebenen Zahlen die jeweilige maximale Anzahl angeben.

Die Adressleitungen 25 laufen parallel in alle Gestelle 58, Baugruppenträger 57 usw. ein. Jede der Leitungen bildet damit eine weitverzweigte Einheit, die im Grunde ein einziger Stromleiter ist. Aus praktischen Gründen ist es jedoch vorteilhaft, die einzelnen Zweige dieses Stromleiters durch Verstärker galvanisch zu trennen, was eine bessere Kontrolle der Spannungspegel sowie bessere Kurzschlusssicherheit gewährt, jedoch keinen wesentlichen Zusatzaufwand bedeutet.

Für den normalen Spezialfall, dass keiner der ersten 16 oder der zweiten Leitkreise 26 angesteuert werden soll, wird auf alle Adressleitungen 25 der logische Wert 0 abgegeben. Hierdurch verbinden alle ersten Leitkreise 16 ihre Eingänge 14 mit ihren Ausgängen 19 und alle zweiten Leitkreise 26 ihre Eingänge 29 mit ihren Ausgängen 24 signalmässig. In diesem Fall ist die Einrichtung zum Testen der Leitungsausrüstung sozusagen ausgeschaltet.

Die Einrichtung arbeitet wie folgt: Im oben genannten, ausgeschalteten Zustand sind in allen ersten 16 und zweiten Leitkreisen 26 die ankommenden 10 bzw. die abgehenden Übertragungsleitungen 20 signalmässig mit der eigentlichen Telexzentrale 30 verbunden. In diesem Fall arbeitet die Telexzentrale und ihre Leitungsausrüstung wie eine eingangs beschriebene bekannte Zentrale. Die Einrichtung wirkt so, als ob sie gar nicht vorhanden wäre.

Soll eine ankommende Übertragungsleitung 10 und die ihr nachgeschaltete Eingangsanschlusseinheit 12 auf ordnungsgemässes Arbeiten überprüft werden, so wird im Adressengenerator bzw. Kanalwähler 52 die entsprechende Adresse des zugeordneten ersten Leitkreises 16 eingestellt. Über die zugeordnete Steuerleitung 27 bzw. über die Adressleitungen 25 und die Decoder 65 bis 68 schaltet hierdurch der angewählte erste Leitkreis 16 seinen bisher gesperrten Signalpfad von seinem Eingang 14 auf die erste Sammelleitung 17 durch. Die über die

0245899

ankommende Leitung 10 ankommenden Leitungssignale s werden damit zum Mithörempfänger 50 geleitet, wo sie auf Richtigkeit bzw. Fehlerhaftigkeit untersucht werden.

Zum Testen der einem ersten Leitkreis 16 nachgeschalteten Einrichtung, insbesondere der Verbindung 19 und der eigentlichen Telexzentrale 30, wird wie oben beschrieben ebenfalls der entsprechende Leitkreis 16 angewählt. Hierdurch schaltet der Signalpfad von der zweiten Sammelleitung 18 zur Verbindung 19 und damit zur Telexzentrale 30 durch, während der Signalpfad von der zugeordneten Eingangsverbindung 14 zur genannten Ausgangsverbindung 19 gesperrt wird. Über die zweite Sammelleitung 18 lassen sich nun vom Textgenerator 51 beliebige Testsignale bzw. ein geeigneter Test-Text, z.B. die Signale für die Generierung eines Anrufs, d.h. Wählsignale, gezielt in die Telexzentrale 30 eingeben.

Bei Verwendung eines ersten Leitkreises 16 entsprechend Fig. 3 sind die beiden oben beschriebenen Testvorgänge jeweils parallel und gleichzeitig durchführbar.

Entsprechend dem Beschriebenen lassen sich vom Textgenerator 51 über die zweite Sammelleitung 18 und jeweils einen angewählten zweiten Leitkreis 26 Testsignale auf die zugeordnete, zu prüfende abgehende Leitung 20 aussenden. Oder es lassen sich von der Telexzentrale 30 über die Verbindung 29 ankommende Signale auf den Mithörempfänger 50 leiten, wo sie untersuchbar sind.

Diese Testvorgänge lassen sich getrennt von den vorgängig beschriebenen Testvorgängen (im Zusammenhang mit den ersten Leitkreisen 16) durchführen. In diesem Fall muss die Adresse so gewählt werden, dass die z.B. paarweise zusammengefassten ersten 16 und zweiten Leitkreise 26 getrennt angewählt werden, was durch ein zusätzliches Bit bzw. durch die Hinzufügung einer zusätzlichen Adressleitung 25 leicht möglich ist.

Die Testvorgänge lassen sich jedoch auch alle zeitlich parallel durchführen. In diesem Fall genügt eine einzige Adresse zum gleichzeitigen Anwählen sowohl des ersten 16 als auch des zugeordneten zweiten Leitkreises 26. Da jedoch jeweils nur eine Sorte von Signalen auf den Sammelleitungen 17 und 18 übertragbar sind, müssen dann diese Leitungen 17, 18 und die zugeordneten Mithörempfänger 50 bzw. Textgeneratoren 51 verdoppelt werden.

Als weitere Variante wäre zu nennen, dass gleichzeitig zwei oder mehr Leitkreise 16 und/oder 26 angewählt werden und mit den gleichen oder auch verschiedenen Testsignalen überprüft werden. In diesem Fall verdoppeln oder vervielfachen sich natürlich die Adressleitungen 25 und die Einrichtungen der Teststation 32.

Insgesamt soll der Aufwand der Einrichtung zum Testen der Leitungsausrüstung einer Vermittlungszentrale im Vergleich zu den sonstigen Einrichtungen einer vollständigen Zentrale stets gering sein, weswegen aufwendige Verdoppelungen von Adress- und Steuerleitungen und/oder der Teststation 32 zwar nicht ausgeschlossen, jedoch nur unter Beachtung sonstiger Umstände vertretbar sind.

Fall 661
0245899

Die Einrichtung wurde am Beispiel einer Telexzentrale beschrieben. Allgemein kann die Einrichtung für jede Art von elektronisch durchschaltender Vermittlungszentrale verwendet werden, insbesondere für Datenzentralen, Teletexzentralen und digital arbeitende Telefonzentralen. In diesen Fällen sind natürlich die Mithörempfänger 50 und der Textgenerator 51 entsprechend dem jeweiligen Dienst zu gestalten.

Die Zahl der ankommenden 10 und abgehenden Übertragungsleitungen 20 und damit die Zahl der Adressen wurde mit bis zu 32'000 angegeben. Diese Zahl entspricht dem Maximalausbau einer bekannten Telexzentrale. Es ist klar, dass bei geringerem Ausbau der Zentrale entsprechend weniger Adressen erforderlich sind bzw. bei grösseren Zentralen mehr.

Fall 661

                                                          **0245899**

1. Einrichtung zum Testen der Leitungsausrüstung einer digital arbeitenden Vermittlungszentrale (30), die an eine Vielzahl ankommender (10) und abgehender (20) Übertragungsleitungen angeschlossen ist, wobei jeder ankommenden Leitung (10) eine Eingangsanschlusseinheit (12) nachgeschaltet und jeder abgehenden Leitung (20) eine Ausgangsanschlusseinheit (22) vorgeschaltet ist,

gekennzeichnet,

- durch eine zentrale Teststation (32), die einen Textgenerator (51), einen Mithörempfänger (50) und einen Adressengenerator bzw. Kanalwähler (52) umfasst,

- durch den Eingangsanschlusseinheiten (12) nachgeschaltete erste Leitkreise (16) zum gesteuerten, signalmässigen Verbinden je einer ankommenden Übertragungsleitung (10) mit je einer Eingangsverbindung (19) der Zentrale (30) oder über eine erste Sammelleitung (17) mit dem Mithörempfänger (50) und zum Verbinden des Textgenerators (51) über eine zweite Sammelleitung (18) mit der jeweiligen Eingangsverbindung (19) der Zentrale (30),

- durch den Ausgangsanschlusseinheiten (22) vorgeschaltete zweite Leitkreise (26) zum gesteuerten, signalmässigen Verbinden je einer abgehenden Übertragungsleitung (20) mit je einer Ausgangsverbindung (29) der Zentrale (30), oder über die zweite Sammelleitung (18) mit dem Textgenerator (51) und zum Verbinden der Zentrale (30) über die erste Sammelleitung (17) mit dem Mithörempfänger (50), und

- durch Steuerverbindungen (25, 27, 28) zum Verbinden des Adressengenerators (52) mit allen Leitkreisen (16, 26).

2. Einrichtung nach Anspruch 1,

dadurch gekennzeichnet,

dass die ersten (16) und zweiten Leitkreise (26) identisch und als integrierte Halbleiterbausteine mit nicht mehr als fünf Toren (40 bis 44 bzw. 45 bis 49) ausgebildet sind.


3. Einrichtung nach Anspruch 1,

dadurch gekennzeichnet,

dass jeder Leitkreis (16, 26) über eine separate Steuerleitung (27, 28) mit dem Adressengenerator (52) verbunden ist.


4. Einrichtung nach Anspruch 1,

dadurch gekennzeichnet,

dass jeder Leitkreis (16, 26) über wenigstens einen Adressendecoder (65 bis 68) und eine Mehrzahl von Adressleitungen (25) mit dem Adressengenerator (52) verbunden ist.


5. Einrichtung nach Anspruch 4,

dadurch gekennzeichnet,

dass jedem Gestell (58), jedem Baugruppenträger (57), jeder Baugruppe (56) und jedem Leitkreis (16, 26) der Vermittlungszentrale ein eigener Adressendecoder (68, 67, 66 bzw. 65) zugeordnet ist, von denen jeder nur eine einzige, ihm zugeordnete Adresse decodiert und durch ein Signal anzeigt.


6. Einrichtung nach Anspruch 4,

dadurch gekennzeichnet,

**0245899**

dass jeweils einer Mehrzahl räumlich zusammengefasster Einheiten (Gestelle 58, Baugruppenträger 57, Baugruppen 56 und/oder Leitkreise 16, 26) ein gemeinsamer Adressendecoder (68, 67, 66, 65) zugeordnet ist, der die den jeweiligen Einheiten zugeordneten Adressen decodiert und ein entsprechendes Signal an die jeweilige Einheit abgibt.

7. Verfahren zum Betreiben der Einrichtung nach Anspruch 1, dadurch gekennzeichnet,

- dass der Adressengenerator (52) durch Abgabe jeweils einer einzigen Adresse einen dieser Adresse zugeordneten Leitkreis (16, 26) für die Dauer einer beliebig langen Testperiode von seinem Normalzustand in seinen Testzustand umschaltet,

- dass während dieser Testperiode der Textgenerator (51) über die zweite Sammelleitung (18) und den jeweiligen Leitkreis (16, 26) beliebige Testsignale an die Zentrale (30) oder die der Adresse zugeordnete abgehende Übertragungsleitung (20) abgibt und/oder der Mithörempfänger (50) über die erste Sammelleitung (17) von der der Adresse zugeordneten ankommenden Übertragungsleitung (10) oder von der Zentrale (30) ankommende Signale empfängt.

8. Verfahren nach Anspruch 7, dadurch gekennzeichnet, dass der Textgenerator (51) Testsignale über einen ersten (16) oder einen zweiten Leitkreis (26) ⊢——— abgibt und gleichzeitig der Mithörempfänger über den gleichen Leitkreis (16, 26) andere Signale empfängt.

0245899

Fig. 1

Fig. 4

Fig. 2

0245899

Fig. 5

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | NATIONAL TELECOMMUNICATIONS CONFERENCE, New Orleans, 29. November - 3. Dezember 1981, Band 3/4, Seiten F6.2.1-6.2.5, IEEE, New York, US; G. GOTHE et al.: "Maintaining the performance quality of a Canadian public data network by centralized surveillance and testing" * Seite F6.2.4, rechte Spalte, Zeile 7 - Seite F6.2.5, linke Spalte, Zeile 26; Figur 5 * | 1,4,7 | H 04 M 3/26<br>H 04 L 11/12 |
| | --- | | |
| Y | US-A-4 525 605 (WEVER) * Spalte 3, Zeile 49 - Spalte 4, Zeile 65; Figuren 3,4 * | 1,4,7 | |
| | --- | | **RECHERCHIERTE SACHGEBIETE (Int Cl 4)** |
| A | US-A-4 090 035 (POPKIN) * Spalte 1, Zeile 39 - Spalte 2, Zeile 13; Figuren 3,4,5 * | 1 | H 04 M<br>H 04 L |
| | --- | | |
| A | IEEE INTERNATIONAL CONFERENCE ON COMMUNICATIONS 1985, Chicago, 23.-26. Juni 1985, Band 1/3, Seiten 6.2.1-6.2.5, IEEE, New York, US; M. DINARO et al.: "An automatic subscriber testing system" * Seite 6.2.3, rechte Spalte, Zeile 14 - Seite 6.2.4, linke Spalte, Zeile 18 * | 1 | |

Der vorliegende Recherchenbericht wurde für alle Patentansprüche erstellt.

| Recherchenort | Abschlußdatum der Recherche | Prüfer |
|---|---|---|
| DEN HAAG | 20-07-1987 | VANDEVENNE M.J. |